# EUROPEAN PATENT SPECIFICATION

(11) **EP 4 105 558 B1**
(45) Date of publication and mention of the grant of the patent: **14.08.2024**
(21) Application number: 22179489.4
(22) Date of filing: 16.06.2022
(51) Int. Cl.: F24B 1/182, A47J 37/06, F24B 1/189, F24B 5/06, F24B 5/08, A47J 37/07

(54) **APPARATUS FOR COOKING FOOD**
VORRICHTUNG ZUM KOCHEN VON LEBENSMITTELN
APPAREIL DE CUISSON D'ALIMENTS

(30) Priority: 17.06.2021 IT 202100015932
(43) Date of publication of application: 21.12.2022
(73) Proprietor: PALAZZETTI LELIO SPA, I-33080 Porcia (PN) (IT)
(72) Inventor: Palazzetti, Ruben, 33080 Porcia (PN) (IT)
(74) Representative: Petraz, Gilberto Luigi

(56) References cited:
- CN-U- 208 988 580
- FR-A1- 3 066 885
- US-A- 3 789 824
- US-A1- 2018 142 895
- US-A1- 2020 054 168

## Description

### FIELD OF THE INVENTION

The present invention concerns an apparatus for cooking food or foodstuffs, comprising a brazier and an oven integrated into a single structure. The apparatus is used in open or semi-open areas of homes, but not only, such as for example in a garden or in a courtyard.

### BACKGROUND OF THE INVENTION

Apparatuses for cooking food are known, which integrate into the same structure an oven, typically wood-burning, and a brazier in which the oven is heated by means of the fumes generated in the brazier itself.

Some of these solutions provide that the brazier is connected to the oven by means of a duct, which allows the fumes generated in the brazier to lap, from the outside, the walls of a cooking chamber of the oven, with the purpose of heating the inside of the oven without a source of heat being provided in it.

One disadvantage of known apparatuses is that obtaining an operating temperature in the oven, that is, a temperature suitable for heating or cooking the food contained in it, depends on the heat provided by the brazier and it may be insufficient to obtain the desired cooking in the desired times.

Another disadvantage of known apparatuses is that it is difficult to obtain uniform heating or cooking of the food located in the oven if the food is not occasionally turned toward the source of the heat.

Another disadvantage is that it is not possible to send the fumes of the brazier in a desired way to defined zones outside the walls of the oven's cooking chamber, and therefore it is not possible to select the portion of the oven to be heated, nor is it possible to intervene on the temperature to be generated in the oven.

There is therefore a need to perfect an apparatus for cooking food that can overcome at least one of the disadvantages of the state of the art.

In particular, one purpose of the present invention is to provide an apparatus for cooking food that allows to cook food in the oven and/or brazier and, possibly, simultaneously.

Another purpose of the present invention is to provide an apparatus for cooking food that allows to make the heating or the cooking of the food in the oven uniform.

Another purpose of the present invention is to provide an apparatus for cooking food that allows to select which parts of the oven's cooking chamber are to be heated with the fumes from the brazier.

Another purpose of the present invention is to provide an apparatus for cooking food that allows to modify the temperature inside the oven.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, an apparatus for cooking food comprises both a brazier having a combustion chamber suitable to produce embers that generate first fumes, and also an oven integrated with the brazier and having at least one upper wall which internally defines a cooking chamber. The cooking chamber comprises a combustion zone suitable to produce a flame that generates seconds fumes and a cooking zone for cooking food; furthermore, with the cooking chamber there are associated evacuation means to evacuate at least the second fumes to the outside. First conveyor means are present to selectively convey the first fumes in contact with an external surface of the upper wall of the oven, in order to heat the oven's cooking chamber.

In accordance with the present invention, the cooking chamber is closed at the lower part by a base; furthermore, under the base there is a heating compartment, in communication at least with the combustion chamber; in addition, at the inlet of the heating compartment there are distribution means mobile between a first open position and a second closed position and configured to selectively distribute the flow of the first fumes from the combustion chamber toward the first conveyor means and/or toward the heating compartment.

In accordance with another aspect of the present invention, the heating compartment is connected to the evacuation means by means of second conveyor means which lap the oven's cooking chamber.

In accordance with another aspect of the present invention, in the first position as above the distribution means are configured to distribute the first fumes into a first flow directed toward the first conveyor means and into a second flow independent of the first flow and directed toward the heating compartment; and in the second position as above they are configured to distribute the first fumes into a third flow, directed toward the heating compartment, from which there is separated a fourth flow directed toward the first conveyor means.

In accordance with another aspect of the present invention, inside the heating compartment there is a partition which develops partly inside the latter and which defines a lower channel and an upper channel; furthermore, the partition cooperates with the distribution means when in the second position, in order to cause the lower channel to be connected to the combustion chamber and the upper channel to be connected to the first conveyor means.

In accordance with another aspect of the present invention, the upper wall is divided into a first part, made of refractory material, in correspondence with the combustion zone, and into a second part made of metal, or other material with high thermal conductivity, in correspondence with the cooking zone.

In accordance with another aspect of the present invention, the oven also comprises a conveyor element, substantially parallel to the second part of the upper wall and distanced from the latter in order to form with it the first conveyor means, through which the first fumes emitted from the combustion chamber of the brazier can be evacuated to the outside of the apparatus.

In accordance with another aspect of the present invention, the upper wall is provided with an aperture to which the evacuation means are connected, which flow into a chimney. The first conveyor means are connected to the evacuation means; furthermore, in correspondence with the aperture there are adjustment means mobile between a first closed position and a second open position.

In accordance with another aspect of the present invention, between the combustion chamber and the first conveyor means there are connection means which have a convergent development from the combustion chamber toward the conveyor means, whereby the first fumes, in the passage toward the latter, undergo an acceleration thanks to the known Venturi effect.

In accordance with the purposes as above, a method for cooking food with the apparatus described above is claimed.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a perspective view, taken from above, of an apparatus for cooking food according to the present invention;
- fig. 2 is a partly sectioned front view of the apparatus of fig. 1 in accordance with a first embodiment, in a first operating condition;
- fig. 3 is a partly sectioned front view of the apparatus of fig. 2, in a second operating condition;
- fig. 4 is a partly sectioned front view of an apparatus according to the present invention, in accordance with a second embodiment.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

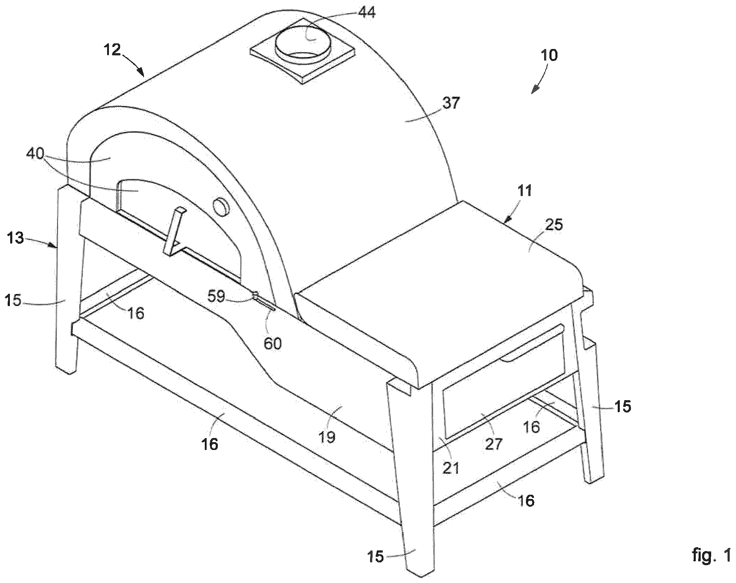

With reference to fig. 1, an apparatus 10 for cooking food according to the present invention and in accordance with a first embodiment comprises a brazier 11 and an oven 12, for example wood-burning, integrated with each other side by side to each other in order to constitute a single structure 13 that has four rest legs 15, only three of which are visible in fig. 1, connected to each other by four corresponding horizontal crosspieces 16. In this description, the term baking or cooking also includes the action of re-heating already cooked food, unless otherwise specified.

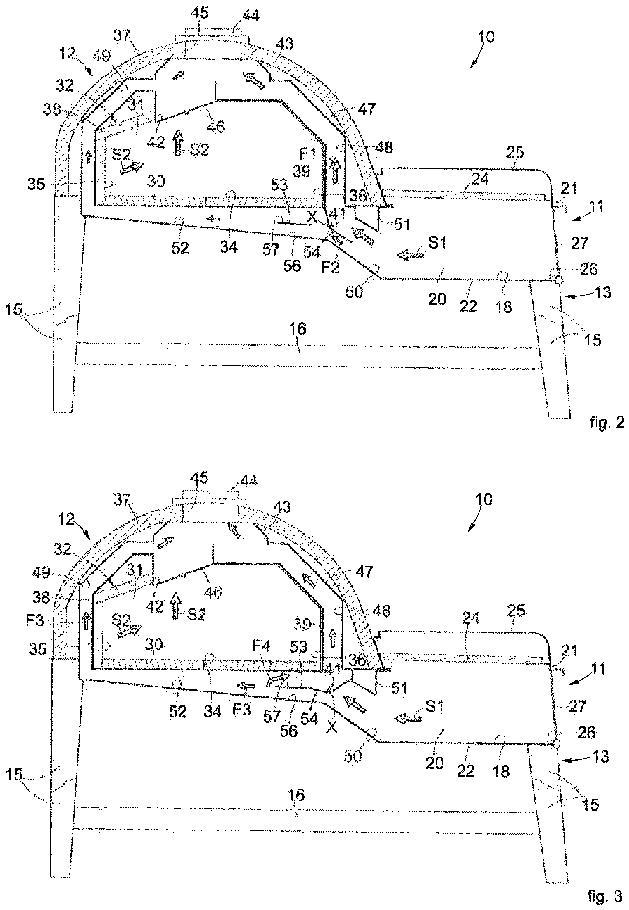

The brazier 11 comprises a substantially closed combustion chamber 18 (figs. 2-4), suitable to produce embers, not shown in the drawings, which generate first fumes S1, which are lead outside the apparatus 10 in the manner that will be described in detail below. In particular, the combustion chamber 18 is defined by a front wall 19 (fig. 1), a rear wall 20 (figs. 2-4), a right lateral wall 21, and by a lower wall 22. In the upper part, the combustion chamber 18 is closed by a cooking plate 24, for example made of refractory material or other suitable material.

A lid 25 is disposed above the cooking plate 24 and, if necessary, it can be removed, raised, or pivoted to allow access to the cooking plate 24, for example to arrange the food to be cooked, or to remove it from the cooking plate 24.

The right lateral wall 21 is provided with an aperture 26, selectively closed by a door 27, through which it is possible to access the combustion chamber 18.

The oven 12 comprises a substantially horizontal base 30 (figs. 2-4), a substantially vertical rear wall 31, and an upper wall 32, substantially in the shape of a vault, with the two substantially vertical flanks, which starting from the base 18, together with the rear wall 31, defines a cooking chamber 34. In particular, the base 30 is made of refractory material and is advantageously disposed at a higher level than that of the lower wall 22 of the brazier 11.

The cooking chamber 34 is divided into a combustion zone 35, on the left in fig. 2, and into a cooking zone 36, on the right in fig. 2, which are contiguous to each other.

In particular, the upper wall 32 is in turn divided into a first part 38, made of refractory material, in correspondence with the combustion zone 35, and into a second part 39, made of metal or other material with high thermal conductivity, in correspondence with the cooking zone 36.

The apparatus 10 comprises a cover 37, for example with a substantially arched shape, which at least partly rests on the structure 13 and which covers the upper wall 32 leaving an empty space between it and the latter.

The oven 12, in its front part, is provided with a door 40 (fig. 1) which allows to selectively access the cooking chamber 34.

The upper wall 32 is provided with an aperture 42 (figs. 2-4) to which a hood 43 is connected, which flows into a chimney 44 configured to evacuate second fumes S2, produced in the combustion zone 35, toward the outside of the apparatus 10. The cover 37 is provided with an aperture 45 from which the chimney 44 exits.

In correspondence with the aperture 42 there is a first closing valve 46, for example of the butterfly type, which is selectively mobile between a first closed position (figs. from 2 to 4) and a second open position, not shown in the drawings.

In accordance with one aspect of the present invention, the oven 12 also comprises a conveyor element 47, substantially parallel to the second part 39 of the upper wall 32 and distanced from the latter in order to form with it a first conveyor duct 48, fluidically connected to the combustion chamber 18, through which the first fumes S1 emitted from the combustion chamber 18 of the brazier 11 can reach the chimney 44 in order to be evacuated outside the apparatus 10.

The conveyor element 47 is, for example, a plate with profile and sizes that can overlap with the second part 39.

Between the combustion chamber 18 and the first conveyor duct 48 there is a connection duct 50 formed substantially by the lower wall 22 and by an upper element 51 opposite thereto.

Furthermore, the upper element 51 develops toward the lower wall 22 in such a way as to form a barrier which retains part of the first fumes S1 in contact with the bottom of the cooking plate 24, leaving part of the first fumes S1 at a lower level free to flow toward the second connection duct 50.

The connection duct 50 has a convergent development from the combustion chamber 18 toward the first conveyor duct 48, whereby the first fumes S1, in the passage toward the latter, undergo an acceleration thanks to the known Venturi effect.

The front wall 19, the rear wall 20 and the lower wall 22 of the brazier 11 develop toward the lower part of the oven 12, below the base 30, so as to define a heating compartment 52 (figs. 2 and 3) in contact with the latter and in communication both with the combustion chamber 18 through the connection duct 50 and also with the first conveyor duct 48.

The heating compartment 52 can be connected to the hood 43 by means of a second conveyor duct 49 which laps the cooking chamber 34 of the oven 12, in particular in correspondence with the combustion zone 35.

At the inlet of the heating compartment 52 there is a second closing valve 54, for example of the blade type, which is pivoted on a substantially horizontal pin 41 mounted on the front wall 19 and on the rear wall 20 in order to rotate about an axis of rotation X between a first position, or open position (fig. 2), and a second position, or closed position (fig. 3).

Inside the heating compartment 52, between the front wall 19 and the rear wall 20, there is a substantially horizontal fixed plate, or partition, 53 which develops for a predetermined length in order to divide the same heating compartment 52, at least partly, into a lower channel 56 and an upper channel 57.

The partition 53 is positioned in such a way as to contact, with the end facing toward the combustion chamber 18, the closing valve 54 when this is in the second position, thus forming a single partition.

In a first operating condition of the apparatus 10, shown in fig. 2, the second closing valve 54 is in the first position and connects the combustion chamber 18 directly to the first conveyor duct 48 and to the heating compartment 52, whereby it separates the first fumes S1 at exit from the connection duct 50 into a first flow F1, which is directed toward the first conveyor duct 48, and into a second flow F2, which is directed toward the second conveyor duct 49. In particular, while the first flow F1 goes toward the aperture 45 and the chimney 44, the second flow F2 goes toward the heating compartment 52 through both the lower channel 56 and also the upper channel 57, both the latter being accessible.

In this first operating condition of the apparatus 10, the flow rate of the first flow F1 is much greater than the flow rate of the second flow F2, thanks to the pressure drop that is generated between the first conveyor duct 48 and the second conveyor duct 49.

Instead, in a second operating condition of the apparatus 10, shown in fig. 3, the second closing valve 54 is in the second position and the combustion chamber 18 is connected only to the lower channel 56 of the heating compartment 52. Therefore, in this second operating condition, there is no direct passage of the first fumes S 1 from the combustion chamber 18 to the first conveyor duct 48 and to the upper channel 57. In fact, all the first fumes S1 are conveyed into the lower channel 56 and, after going beyond the partition, are divided into two different flows, that is, into a third flow F3, which is conveyed toward the second conveyor duct 49, and into a fourth flow F4 (fig. 3), which is conveyed toward the first conveyor duct 48 through the upper channel 57, that is, substantially performing a U-turn. In fact, with the second closing valve 54 in the closed position and thanks to the presence of the partition 53, the first fumes S1 are not prevented from reaching the first conveyor duct 48, but their inflow is slowed down by the longer and more tortuous path.

It follows that, by suitably intervening on the sizing of the members involved, for example, on the length of the partition 53, it is possible to modify the pressure difference between the first conveyor duct 48 and the second conveyor duct 49, and therefore calculate the flow rates of the two flows F3 and F4 when designing the apparatus 10.

Advantageously, with the second closing valve 54 in the second position, the pressure difference created between the first conveyor duct 48 and the second conveyor duct 49 is substantially balanced so that the third flow F3 and the fourth flow F4 can substantially have the same flow rate.

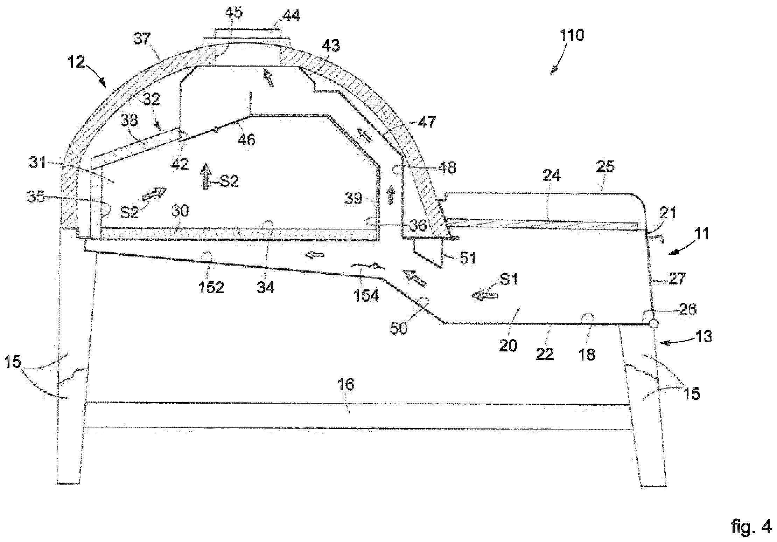

In accordance with a second embodiment of the present invention, shown in fig. 4, an apparatus 110 comprises, instead of the heating compartment 52, a heating compartment 152 which is closed at an opposite end to the combustion chamber 18, so that the second conveyor duct 49 is not present.

The apparatus 110 comprises, instead of the second valve 54, a second closing valve 154, which is selectively mobile between an open position, shown in fig. 4, and a closed position, not shown in the drawings, to allow or prevent, respectively, the passage of the first fumes S1 from the combustion chamber 18 of the brazier 11 toward the heating compartment 152.

In particular, with the second valve 154 in the open position the first fumes S1 can flow both into the heating compartment 152 and also into the first conveyor duct 48, while with the second valve 154 in the closed position the first fumes S 1 are prevented from accessing the heating compartment 152, whereby they are conveyed only toward the first conveyor duct 48.

In other embodiments not shown in the drawings, the apparatus 10 or 110 can be provided with a second chimney, additional to the chimney 44, connected to the first conveyor duct 48 so that the first fumes S1 and the second fumes S2 can be evacuated in two independent chimneys.

The second closing valve 54 or possibly the closing valve 154 can be actuated by a cursor 59 (fig. 1) which is sliding along a shaped slot 60 made on the front wall 19 and is disposed at least partly outside the apparatus 10 or 110. In this way, it is possible to selectively regulate the flow rate of the flow of fumes that transits in the first conveyor duct 48, so as to consequently regulate the temperature inside the cooking chamber 34 of the oven 12.

The operation of the apparatus 10 or 110 described heretofore, which also corresponds to the method according to the present invention, is as follows.

In accordance with a first operating mode, the method provides to generate first fumes S1 in the combustion chamber 18 and suitably take them into contact with the outside of the cooking chamber 34 by means of a first conveyor duct 48. Furthermore, the method also provides to generate second fumes S2 in the combustion zone 35 of the cooking chamber 34 by lighting a flame.

It is possible to dispose food to be cooked on the cooking plate 24 of the brazier 11 and/or in the cooking zone 36 of the cooking chamber 34 which is located between the combustion zone 35 and the first conveyor duct 48. The food in the cooking chamber 34 is therefore located between two sources of heat, respectively the flame of the combustion zone 35 and the first conveyor duct 48, which radiates the heat of the first fumes S1 that pass through it.

The first closing valve 46 is open to allow the evacuation of the second fumes S2 outside the apparatus 10 through the hood 43 and the chimney 44 together with the first fumes S1.

In this operating mode, the apparatus 10, 110 allows to expose the food to two sources of heat, substantially opposite each other, in order to cook opposite parts of the food in a uniform manner in the cooking zone 36. Doing so reduces or even eliminates the intervention, by a user, to modify, from time to time, the position of the food in order to expose different parts of it to the single source of heat, as is conventional to do in known ovens.

Therefore, the need to open the door 40 of the cooking chamber 34 to carry out the interventions described above is reduced or even eliminated, allowing to preserve the temperature inside the cooking chamber 34 itself. In addition, and advantageously, any food on the cooking plate 24 is cooked simultaneously. In another operating mode, the method provides to generate only the first fumes S 1 in the combustion chamber 18 and suitably lead them into contact with at least part of the upper wall 32. In this other operating mode, it is not provided to generate the second fumes S2, therefore the first closing valve 46 is closed so that the first fumes S1 do not access the cooking chamber 34 when they share the same chimney 44 as the second fumes S2.

In other operating modes, the method provides to act on the second closing valve 54, or on the second closing valve 154, to distribute the first fumes S 1 selectively toward the first conveyor duct 48 and/or toward the heating compartment 52, or the heating compartment 152, respectively.

The first fumes S 1 generated pass through the first conveyor duct 48 heating the cooking chamber 34 to a temperature, for example, between about 100°C and about 120°C, allowing the oven 12 to be used, for example, as a food heater, without needing to generate a flame in the cooking chamber 34 itself.

In another operating mode, the method provides to generate the second fumes S2 in the combustion zone 35 and to open the first closing valve 46 so that the first fumes S1 are evacuated from the cooking chamber 34. In this case, the oven 12 of the apparatus 10 is used in a conventional way.

In accordance with the operating modes in which the generation of the first fumes S1 in the brazier 11 is provided, the method provides to open the second closing valve 54 or 154 so that the first fumes S1 flow into the heating compartment 52 or 152 below the base 30 of the oven 12. In this way, it is possible to also supply heat from below, further improving the cooking capacity of the apparatus 10, 110. In fact, even in the absence of the second fumes S2, conveying the first fumes S 1 into the heating compartment 52 or 152 allows to bring the cooking chamber 34 to a temperature suitable for cooking food, for example, between about 180°C and about 200°C. Naturally, the apparatus 10 according to the embodiment shown in figs. 2 and 3, thanks to the presence of the additional second conveyor duct 49, allows to obtain a higher temperature inside the cooking chamber 34 than the apparatus 110 according to the embodiment shown in fig. 4, in which only the first conveyor duct 48 is present.

In both embodiments, this allows the oven 12 to be used, for example, to cook food without generating any flame in the cooking chamber 34 itself.

The apparatus 10, 110 is therefore very versatile, since it can be used in at least three different operating modes, allowing, depending on the mode of use, to make cooking food practical, fast, uniform and adaptable to different needs, which so far has not been achievable with the apparatuses for cooking food of the state of the art.

## Claims

1. Apparatus (10, 110) for cooking food comprising both a brazier (11) having a combustion chamber (18) suitable to produce embers that generate first fumes (S1), and also an oven (12) integrated with said brazier (11) and having at least one upper wall (32) which internally defines a cooking chamber (34) closed at the lower part by a base (30), wherein said cooking chamber (34) comprises a combustion zone (35) suitable to produce a flame that generates seconds fumes (S2) and a cooking zone (36) for cooking food, wherein with said cooking chamber (34) there are associated evacuation means (43) to evacuate at least said second fumes (S2) to the outside, and wherein first conveyor means (48) are present to convey said first fumes (S1) in contact with an external surface of said upper wall (32) of said oven (12), in order to heat said cooking chamber (34) of said oven (12), **characterized in that** under said base (30) there is a heating compartment (52, 152), in communication at least with said combustion chamber (18), **and in that** at the inlet of said heating compartment (52, 152) there are distribution means (54, 154) mobile between a first position and a second position and configured to selectively distribute the flow of said first fumes (S 1) from said combustion chamber (18) toward said first conveyor means (48) and/or toward said heating compartment (52, 152).

2. Apparatus (10, 110) as in claim 1, **characterized in that** said heating compartment (52) is connected to said evacuation means (43) by means of second conveyor means (49) which lap said cooking chamber (34) of said oven (12).

3. Apparatus (10, 110) as in any claim hereinbefore, **characterized in that** said distribution means (54) in said first position are configured to distribute said first fumes (S1) into a first flow (F1) directed toward said first conveyor means (48) and into a second flow (F2) independent of said first flow (F1) and directed toward said heating compartment (52); and in said second position they are configured to distribute said first fumes (S1) into a third flow (F3), directed toward said heating compartment (52), from which there is separated a fourth flow (F4) directed toward said first conveyor means (48).

4. Apparatus (10, 110) as in any claim hereinbefore, **characterized in that** inside said heating compartment (52) there is a partition (53) which develops partly inside the latter in order to define a lower channel (56) and an upper channel (57) **and in that** said distribution means (54) selectively cooperate with said partition (53) in order to form a single partition.

5. Apparatus (10, 110) as in any claim hereinbefore, **characterized in that** said upper wall (32) is divided into a first part (38), made of refractory material, in correspondence with said combustion zone (35), and into a second part (39), made of metal or other material with high thermal conductivity, in correspondence with said cooking zone (36).

6. Apparatus (10, 110) as in any claim hereinbefore, **characterized in that** said oven (12) also comprises a conveyor element (47), substantially parallel to said second part (39) of said upper wall (32) and distanced from the latter in order to form with it said first conveyor means (48), through which said first fumes (S1) emitted from said combustion chamber (18) of said brazier (11) can be evacuated to the outside of the apparatus (10, 110).

7. Apparatus (10,110) as in any claim hereinbefore, **characterized in that** said upper wall (32) is provided with an aperture (42) to which said evacuation means (43) are connected, which flow into a chimney (44), **in that** said first conveyor means (48) are connected to said evacuation means (43) **and in that** in correspondence with said aperture (42) there are adjustment means (46) mobile between a first closed position and a second open position.

8. Apparatus (10, 110) as in any claim hereinbefore, **characterized in that** between said combustion chamber (18) and said first conveyor means (48) there are connection means (50) which have a convergent development from said combustion chamber (18) toward said conveyor means (48), whereby said first fumes (S1), in the passage toward the latter, undergo an acceleration, thanks to the known Venturi effect.

9. Method for cooking food with an apparatus (10, 110) as in any claim hereinbefore, the method providing to generate at least said first fumes (S1) in said combustion chamber (18) of said brazier (11) and, optionally, to generate said second fumes (S2) in said combustion zone (35) of said cooking chamber (34) of said oven (12), and providing to convey said first fumes (S1) in contact at least with said cooking zone (36) in order to heat said cooking chamber (34), **characterized in that** said first fumes (S1) are selectively distributable by means of distribution means (54, 154), mobile between a first position and a second position, from said combustion chamber (18) toward said first conveyor means (48) and/or toward said heating compartment (52, 152), present below a base (30) of said cooking chamber (34) and in communication at least with said combustion chamber (18).

## Patentansprüche

1. Vorrichtung (10, 110) zum Garen von Nahrungsmitteln, die sowohl eine Kohlenpfanne (11) mit einer Brennkammer (18) als auch einen Ofen (12) umfasst, wobei die Brennkammer (18) geeignet ist, erste Dämpfe (S1) erzeugende Glut zu erzeugen, und wobei der Ofen (12) mit der Kohlenpfanne (11) integriert ausgebildet ist und mindestens eine obere Wand (32) aufweist, die eine innenliegende Garkammer (34) begrenzt, die unten durch eine Basis (30) abgeschlossen ist, wobei die Garkammer (34) eine Verbrennungszone (35) umfasst, die geeignet ist, eine zweite Dämpfe (S2) erzeugende Flamme zu erzeugen, und wobei die Garkammer (34) eine Garzone (36) zum Garen von Nahrungsmitteln umfasst, wobei an die Garkammer (34) Ableitmittel (43) angebunden sind, um mindestens die zweiten Dämpfe (S2) nach außen abzuleiten, und wobei erste Fördermittel (48) vorhanden sind, um die ersten Dämpfe (S1) in Kontakt mit einer Außenfläche der oberen Wand (32) des Ofens (12) zu befördern, um die Garkammer (34) des Ofens (12) anzuheizen, **dadurch gekennzeichnet, dass** sich unter der Basis (30) ein Heizraum (52, 152) befindet, der zumindest mit der Brennkammer (18) in Verbindung steht, und dass sich am Einlass des Heizraums (52, 152) Verteilungsmittel (54, 154) befinden, die sich zwischen einer ersten Position und einer zweiten Position bewegen lassen und dazu konfiguriert sind, den Strom der ersten Dämpfe (S1) von der Brennkammer (18) selektiv in Richtung der ersten Fördermittel (48) und/oder in Richtung des Heizraums (52, 152) zu verteilen.

2. Vorrichtung (10, 110) nach Anspruch 1, **dadurch gekennzeichnet, dass** der Heizraum (52) mit dem Ableitmittel (43) mittels eines zweiten Fördermittels (49) verbunden ist, welches die Garkammer (34) des Ofens (12) umschließt.

3. Vorrichtung (10, 110) nach einem der vorangehenden Ansprüche, **dadurch gekennzeichnet, dass** die Verteilungsmittel (54) in der ersten Position so konfiguriert sind, dass sie die ersten Dämpfe (S1) in einen in Richtung der ersten Fördermittel (48) gerichteten ersten Strom (F1) und in einen von dem ersten Strom (F1) unabhängigen und in Richtung des Heizraums (52) gerichteten zweiten Strom (F2) aufteilen, und **dadurch gekennzeichnet, dass** die Verteilungsmittel (54) in der zweiten Position so konfiguriert sind, dass sie die ersten Dämpfe (S1) in einen in Richtung des Heizraums (52) gerichteten dritten Strom (F3) aufteilen, von dem ein in Richtung der ersten Fördermittels (48) gerichteter vierter Strom (F4) abgetrennt ist.

4. Vorrichtung (10, 110) nach einem der vorangehenden Ansprüche, **dadurch gekennzeichnet, dass** sich im Inneren des Heizraums (52) eine Trennwand (53) befindet, die sich teilweise innerhalb des letzteren erstreckt, um einen unteren Kanal (56) und einen oberen Kanal (57) zu definieren, und dass die Verteilungsmittel (54) selektiv mit der Trennwand (53) zusammenwirken, um eine einzelne Trennwand zu bilden.

5. Vorrichtung (10, 110) nach einem der vorangehenden Ansprüche, **dadurch gekennzeichnet, dass** die obere Wand (32) in einen der Verbrennungszone (35) entsprechenden ersten Teil (38) aus feuerfestem Material und in einen der Garzone (36) entsprechenden zweiten Teil (39) aus Metall oder einem anderen Material mit hoher Wärmeleitfähigkeit unterteilt ist.

6. Vorrichtung (10, 110) nach einem der vorangehenden Ansprüche, **dadurch gekennzeichnet, dass** der Ofen (12) außerdem ein Förderelement (47) umfasst, welches im Wesentlichen parallel zum zweiten Teil (39) der oberen Wand (32) und von dieser beabstandet ausgebildet ist, um mit ihm das erste Fördermittel (48) zu bilden, durch die die aus der Brennkammer (18) der Kohlenpfanne (11) austretenden ersten Dämpfe (S1) aus der Vorrichtung (10, 110) nach außen hin abgeführt werden können.

7. Vorrichtung (10, 110) nach einem der vorangehenden Ansprüche, **dadurch gekennzeichnet, dass** die obere Wand (32) mit einer Öffnung (42) versehen ist, an die die in einen Kamin (44) mündenden Ableitmittel (43) angeschlossen sind, dass die ersten Fördermittel (48) mit den Ableitmitteln (43) verbunden sind und dass in Übereinstimmung mit der Öffnung (42) Einstellmittel (46) vorhanden sind, die sich zwischen einer ersten geschlossenen Position und einer zweiten offenen Position bewegen lassen.

8. Vorrichtung (10, 110) nach einem der vorangehenden Ansprüche, **dadurch gekennzeichnet, dass** zwischen der Brennkammer (18) und dem ersten Fördermittel (48) Verbindungsmittel (50) vorhanden sind, die einen zusammenlaufenden Aufbau von der Brennkammer (18) zu der Fördereinrichtung (48) aufweisen, wodurch die ersten Dämpfe (S 1) auf dem Weg zu dieser eine Beschleunigung aufgrund des bekannten Venturi-Effekts erfahren.

9. Verfahren zum Garen von Nahrungsmitteln mit einer Vorrichtung (10, 110) nach einem der vorangehenden Ansprüche, wobei das Verfahren die Erzeugung von zumindest den ersten Dämpfen (S1) in der Brennkammer (18) der Kohlenpfanne (11) und wahlweise die Erzeugung der zweiten Dämpfe (S2) in der Verbrennungszone (35) der Garkammer (34) des Ofens (12) vorsieht, wobei zum Anheizen der Garkammer (34) die ersten Dämpfe (S1) zumindest mit der Garzone (36) in Kontakt gebracht werden, **dadurch gekennzeichnet, dass** die ersten Dämpfe (S1) durch Verteilungsmittel (54, 154), dies sich zwischen einer ersten Position und einer zweiten Position bewegen lassen, von der Brennkammer (18) selektiv in Richtung der ersten Fördermittel (48) und/oder in Richtung des Heizraums (52, 152) verteilt werden können, wobei der Heizraum (52, 152) sich unterhalb der Basis (30) der Garkammer (34) und in Verbindung mit wenigstens der Brennkammer (18) befindet.

## Revendications

1. Appareil (10, 110) de cuisson d'aliments comportant à la fois un foyer de braises (11) ayant une chambre de combustion (18) adaptée pour produire de la braise qui génère des premières fumées (S1), et également un four (12) intégré dans ledit foyer de braises (11) et ayant au moins une paroi supérieure (32) qui définit intérieurement une chambre de cuisson (34) fermée sur la partie inférieure par une base (30), dans lequel ladite chambre de cuisson (34) comporte une zone de combustion (35) adaptée pour produire une flamme qui génère des secondes fumées (S2) et une zone de cuisson (36) pour cuire des aliments, dans lequel des moyens d'évacuation (43) sont associés à ladite chambre de cuisson (34) pour évacuer au moins lesdites secondes fumées (S2) vers l'extérieur, et dans lequel des premiers moyens d'acheminement (48) sont présents pour transporter lesdites premières fumées (S1) en contact avec une surface externe de ladite paroi supérieure (32) dudit four (12), afin de chauffer ladite chambre de cuisson (34) dudit four (12), **caractérisé en ce qu'**il y a un compartiment de chauffage (52, 152) sous ladite base (30), en communication avec au moins ladite chambre de combustion (18), et **en ce qu'**à l'entrée dudit compartiment de chauffage (52, 152), il y a des moyens de répartition (54, 154) mobiles entre une première position et une seconde position et configurés pour répartir sélectivement le flux desdites premières fumées (S1) provenant de ladite chambre de combustion (18) vers lesdits premiers moyens d'acheminement (48) et/ou vers ledit compartiment de chauffage (52, 152).

2. Appareil (10, 110) selon la revendication 1, **caractérisé en ce que** ledit compartiment de chauffage (52) est relié auxdits moyens d'évacuation (43) par des seconds moyens d'acheminement (49) qui enveloppent ladite chambre de cuisson (34) dudit four (12).

3. Appareil (10, 110) selon l'une quelconque des revendications précédentes, **caractérisé en ce que** lesdits moyens de répartition (54) dans ladite première position sont configurés pour répartir lesdites premières fumées (S1) dans un premier flux (F1) dirigé vers lesdits premiers moyens d'acheminements (48) et dans un deuxième flux (F2) indépendant dudit premier flux (F1) et dirigé vers ledit compartiment de chauffage (52), et dans ladite seconde position, ils sont configurés pour répartir lesdites premières fumées (S1) dans un troisième flux (F3), dirigé vers ledit compartiment de chauffage (52), à partir duquel un quatrième flux (F4) séparé est dirigé vers lesdits premiers moyens d'acheminement (48).

4. Appareil (10, 110) selon l'une quelconque des revendications précédentes, **caractérisé en ce qu'**à l'intérieur dudit compartiment de chauffage (52) il y a une séparation (53) qui se développe en partie à l'intérieur de ce dernier afin de définir un canal inférieur (56) et un canal supérieur (57) et **en ce que** lesdits moyens de répartition (54) coopèrent sélectivement avec ladite séparation (53) afin de former une seule séparation.

5. Appareil (10, 110) selon l'une quelconque des revendications précédentes, **caractérisé en ce que** ladite paroi supérieure (32) est divisée en une première partie (38), constituée d'un matériau réfractaire, en correspondance avec ladite zone de combustion (35), et en une seconde partie (39), constituée d'un métal ou d'un autre matériau ayant une conductivité thermique élevée, en correspondance avec ladite zone de cuisson (36).

6. Appareil (10, 110) selon l'une quelconque des revendications précédentes, **caractérisé en ce que** ledit four (12) comporte également un élément d'acheminement (47), sensiblement parallèle à ladite seconde partie (39) de ladite paroi supérieure (32) et à distance de cette dernière afin de former avec elle lesdits premiers moyens d'acheminement (48), par l'intermédiaire desquels lesdites premières fumées (S1) émises à partir de ladite chambre de combustion (18) dudit foyer de braises (11) peuvent être évacuées vers l'extérieur de l'appareil (10, 110).

7. Appareil (10, 110) selon l'une quelconque des revendications précédentes, **caractérisé en ce que** ladite paroi supérieure (32) est pourvue d'une ouverture (42) à laquelle lesdits moyens d'évacuation (43) sont reliés, qui s'écoulent dans une cheminée (44), **en ce que** lesdits premiers moyens d'acheminement (48) sont reliés auxdits moyens d'évacuation (43) et **en ce qu'**en correspondance avec ladite ouverture (42), il y a des moyens de réglage (46) mobiles entre une première position fermée et une seconde position ouverte.

8. Appareil (10, 110) selon l'une quelconque des revendications précédentes, **caractérisé en ce qu'**entre ladite chambre de combustion (18) et lesdits premiers moyens d'acheminement (48), il y a des moyens de liaison (50) qui ont un développement convergent à partir de ladite chambre de combustion (18) vers lesdits moyens d'acheminement (48), en sorte que lesdites premières fumées (S1), pendant le passage vers ces derniers, subissent une accélération, grâce à l'effet Venturi connu.

9. Procédé pour cuire des aliments avec un appareil (10, 110) selon l'une quelconque des revendications précédentes, le procédé permettant de générer au moins lesdites premières fumées (S1) dans ladite chambre de combustion (18) dudit foyer de braises (11) et, facultativement, de générer lesdites secondes fumées (S2) dans ladite zone de combustion (35) de ladite chambre de cuisson (34) dudit four (12), et permettant d'acheminer lesdites premières fumées (S1) en contact avec au moins ladite zone de cuisson (36) afin de chauffer ladite chambre de cuisson (34), **caractérisé en ce que** lesdites premières fumées (S1) peuvent être sélectivement distribuées par des moyens de distribution (54, 154), mobiles entre une première position et une seconde position, à partir de ladite chambre de combustion (18) vers lesdits premiers moyens de convoyeur (48) et/ou vers ledit compartiment de chauffage (52, 152), présents sous une base (30) de ladite chambre de cuisson (34) et en communication avec au moins ladite chambre de combustion (18).
